# EUROPÄISCHE PATENTANMELDUNG

(11) **EP 0 856 256 A1**
(43) Veröffentlichungstag der Anmeldung: **05.08.1998**
(21) Anmeldenummer: 98101500.1
(22) Anmeldetag: 29.01.1998
(51) Int. Cl.: A21B 3/15

(54) **Backfolie und Backformeinrichtung mit einer derartigen Backfolie**

(30) Priorität: 04.02.1997 DE 29701878 U
(71) Anmelder: Hartmuth, Werner, 66955 Pirmasens (DE)
(72) Erfinder: Hartmuth, Werner, 66955 Pirmasens (DE)
(74) Vertreter: Clemens, Gerhard, Dr.-Ing.

(57) **Zusammenfassung**

Eine Backfolie (10) zur Verwendung als Unterlage von Backgut in/auf Backformen (20), Backplatten, Backblechen, Kippdielen oder sonstiger als Form geeigneter Mittel in Bäckereien, wobei die Unterlage eine einseitig mit einer Klebeschicht (12) versehene Antihaftfolie (16, 18) aufweist, ist gekennzeichnet durch folgende in Kombination zusammenwirkende Merkmale:
- Rohglasgewebeschicht (16),
- beidseitig der Rohglasgewebeschicht (16) aufgebrachte Polytetrafluorethylen (PTFE)-Dispersionsbeschichtung (18) mit einem Polytetrafluorethylengehalt von 55 bis 85 Gew.%, insbesondere 65 bis 75 Gew.%,
- einseitig auf die Dispersionsbeschichtung (18) aufgebrachte lebensmittelechte Klebeschicht (12) und
- auf der Klebeschicht (12) einseitig lösbar angebrachte Schutzschicht (14).

## Beschreibung

### TECHNISCHES GEBIET

Die Erfindung betrifft eine Backfolie zur Verwendung als Unterlage von Backgut in/auf Backformen, Backplatten, Backblechen, Kippdielen oder sonstiger als Form geeigneter Mittel für zu backende Lebensmittel, wobei die Unterlage eine einseitige mit einer Kleberschicht versehene Antihaftfolie aufweist. Die Erfindung betrifft weiterhin eine Backformeinrichtung, in bzw. auf die eine derartige Backfolie aufgeklebt ist und ein Verfahren zum Aufbringen derartiger Backfolie auf eine Backformeinrichtung.

### STAND DER TECHNIK

Es sind PTFE-Glasgewebefolien üblicher Herstellart in der Bäckerei als Folien ohne Klebeschicht bekannt. Diese Folien werden als Backunterlage zum Backen verschiedener Produkte verwendet. Sie sind nicht fest mit dem Untergrund der Trägermaterialien verbunden und dadurch für viele Einsatzzwecke nicht geeignet. Unter den Folien bildet/bilden sich z.B. Schmutz/Verbrennungsrückstände und die Teiglinge werden verunreinigt, wenn die Folien nicht genau aufliegen oder die Trägermaterialien ohne Folie verwendet werden.

Eine andere gebräuchliche Anwendungsart ist die nicht lösbare, feste Verbindung von PTFE oder Silikon mit den Trägermaterialien, wie Backbleche, Baguettebleche usw. Dies hat jedoch den Nachteil, daß die Beschichtung sich nach einiger Zeit teilweise löst, insbesondere aufgrund starker mechanischer Beanspruchung beim Reinigen. Dabei gelangen Beschichtungspartikel unter Umständen in die aufgelegten Teiglinge. Die Backbleche müssen deshalb nach 1 bis 2 Jahren vollständig neu beschichtet werden, was einen erheblichen Kostenaufwand verursacht.

Weiterhin sind Silikongewebe bekannt, die ebenfalls nach einiger Zeit an den Stellen, wo keine Teiglinge aufliegen, Verbrennungsrückstände hinterlassen. Das Material wird durch die Verbrennung an den Stellen, wo keine Teiglinge aufliegen, spröde und zerreißt nach einiger Zeit. Bei Baguetteblechen sind diese Silikonfolien U-förmig ausgebildet und auf einem Gitterdrahtgestell aufgelegt. Aufgrund der technischen Anforderungen kann dieses Drahtgestell nicht genügend stabil konstruiert werden und hat deshalb einen hohen Verschleiß.

Aus dem deutschen Gebrauchsmuster G 82 20 320.2 ist eine Backfolie aus Polytetrafluorethylen mit eingebettetem Glasfasergewebe bekannt, die in Backformen eingelegt wird.

Die deutsche Offenlegungsschrift 43 28 952 offenbart eine Backplatte für Bäckereien, insbesondere zur Herstellung von Kleinbackwaren, bestehend aus einem Backblech aus Metall und einer darauf angeordneten Unterlage, um eine direkte Berührung der Backware mit dem Metall zu verhindern, die sich dadurch auszeichnet, daß die Unterlage aus einer einseitig mit einer Klebeschicht versehenen Antihaftfolie besteht, wobei eine an sich bekannte Antihaftglasfaserfolie zum Einsatz kommen kann, welche bei Nichtgebrauch auf Seiten der Klebeschicht mit einer Schutzschicht abgedeckt ist.

### DARSTELLUNG DER ERFINDUNG

Ausgehend von dem genannten Stand der Technik liegt der vorliegenden Erfindung die Aufgabe bzw. das technische Problem zugrunde, eine Backfolie für Backformen und eine Backformeinrichtung anzugeben, deren Verwendbarkeit gegenüber den bekannten Backfolien/Backformeinrichtung optimiert ist, die eine dauerhaft zuverlässige Funktion gewährleistet und einen wirtschaftlichen Einsatz ermöglicht. Der Erfindung liegt weiterhin die Aufgabe bzw. das technische Problem zugrunde, ein Verfahren zum Aufbringen von Backfolien auf Backformeinrichtungen anzugeben, das eine dauerhaft zuverlässige und faltenfreie Verbindung gewährleistet.

Die erfindungsgemäße Backfolie ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Backfolie ist demgemäß gekennzeichnet durch die Kombination folgender Merkmale: Rohglasgewebeschicht, beidseitig der Rohglasgewebeschicht aufgebrachte Polytetrafluorethylen (PTFE)-Dispersionsbeschichtung mit einem Polytetrafluorethylengehalt von 55 bis 85 Gew.%, insbesondere 65 bis 75 Gew.%, einseitig auf die Dispersionsbeschichtung aufgebrachte lebensmittelechte Klebeschicht und auf der Klebeschicht einseitig lösbar angebrachte Schutzschicht. Die Gewichtsprozentangabe bezieht sich hierbei auf das Gewicht des beschichteten Gewebes ohne Kleber.

Weiterhin liegt bei der selbstklebend ausgerüsteten Folie erfindungsgemäß die Klebermenge im Bereich von 50 bis 80 g/m² (Gramm pro Quadratmeter), insbesondere um ca. 50 g/m². Dabei ist erkannt worden, daß die genannte Klebermenge entscheidend eine faltenfreie Aufklebung der PTFE-Folie auf die Backform, insbesondere aus Aluminium, gewährleistet.

Eine besonders bevorzugte Ausgestaltung zeichnet sich dadurch aus, daß die Dispersionsbeschichtung auf dem der Klebeschicht zugewandten Bereich aufgerauht ausgebildet ist und bevorzugt mit einer Primer-Beschichtung, d.h. einer Grundbeschichtung mit haftvermittelnder Wirkung versehen ist.

Es hat sich als günstig herausgestellt, den Kleber mit einer Zusatzkomponente zwecks einer besseren Vernetzung zu versehen, um eine dauerhaft zuverlässige Verbindung bzw. Verklebung zu gewährleisten.

Der für die Klebeschicht verwendete Kleber ist bevorzugt als Silikonkleber ausgebildet.

Das für die Schutzschicht eingesetzte Material ist gemäß einer bevorzugten Ausgestaltung aus einer gewellten Polyvinylchlorid(PVC)-Folie, bevorzugt beschichtet, was einen besonders wirtschaftlichen Einsatz ermöglicht, wobei gleichzeitig gute Abdeckeigenschaften und leichte Abzieheigenschaften umgesetzt werden können.

Hinsichtlich der Optimierung im Sinne der Erfindung ist der PTFE-Gehalt der Dispersionsbeschichtung so weit reduziert, daß Anhaftungen vermieden werden und gleichzeitig ein zu leichtes Verrutschen des Backgutes verhindert wird, wobei letzteres insbesondere bei bekannten Folien mit stärkerer Beschichtung auftrat.

Weiterhin ist die Zusammensetzung des Klebers so ausgebildet, daß eine Haftung auf verschiedenen, in der Bäckerei vorkommenden Trägermaterialien, wie Holz, Edelstahl, Aluminium und Kunststoff, möglich ist.

Die Haftstärke des Klebers ist hierbei so ausgebildet, daß bei einer Entfernung der Glasgewebefolie keine Rückstände auf den Trägermaterialien zurückbleiben. Gleichzeitig gewährleistet die Folie jedoch eine Haftung über einen längeren, insbesondere mehrjährigen Zeitraum.

Eine besonders bevorzugte Weiterbildung der erfindungsgemäßen Backfolie zeichnet sich dadurch aus, daß die Folie in einem vorgebbaren Raster mittels sogenannter Nadelung bearbeitete Punkte aufweist. Durch diese Maßnahme wird die Neigung der Backfolie zur Faltenbildung aufgrund ihrer thermischen Beanspruchung verhindert und gleichzeitig wird die Gefahr von Anhaftungen, die sich ungünstig hinsichtlich eines langdauernden hygienischen Einsatzes derartiger Backfolien auswirkt, deutlich vermindert, wenn gar nicht gänzlich unterbunden. Die Nadelung der PTFE-Folie ist dabei so ausgebildet, daß kein Kontakt der Backware mit dem Trägermaterial (Backform) stattfindet. Es findet damit ein sehr guter Hitzeaustausch zur Backware statt, wobei gleichzeitig die von den Bäckereien gewünschte Verbesserung der Boden-/Krustenbildung auftritt. Die Bildung von Luftblasen bei der ersten Erhitzung der Bleche infolge Verdunstung von Kleberfeuchtigkeit, die im Normalfall zur Faltenbildung der PTFE-Folie führt, wird dadurch verhindert. Die Faltenbildung führte bisher zur vorzeitigen Verbrennung des PTFE und damit zur einer wesentlichen Verringerung der Lebensdauer der Folie. Die Nadelung ist damit ein sehr erfindungswesentliches Merkmal.

Die erfindungsgemäße Backformeinrichtung ist durch die Merkmale des unabhängigen Anspruchs 9 gegeben. Diese Backformeinrichtung zeichnet sich dadurch aus, daß sie eine aufgeklebte Backfolie der oben beschriebenen Art aufweist.

Das erfindungsgemäße Verfahren zum Aufbringen einer Backfolie auf eine Backformeinrichtung ist durch die Merkmale des unabhängigen Verfahrensanspruchs 10 gegeben. Das erfindungsgemäße Verfahren ist gekennzeichnet durch folgende Verfahrensschritte: Abziehen der Schutzschicht, Auflegen und Andrücken der Backfolie in/auf die Backformeinrichtung und erstmalige Erhitzung der Backformeinrichtung mit Backfolie maximal 15 Minuten, insbesondere 10 Minuten, auf eine Temperatur von maximal 250 ° C (Grad Celsius), insbesondere 200 ° C (Grad Celsius).

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Schnitt durch eine Backfolie,
- Fig. 2: schematischer Schnitt durch ein Backblech mit aufgeklebter Backfolie,
- Fig. 3: schematischer Detailschnitt durch eine Backfolie mit detaillierter Darstellung des Schichtaufbaus und
- Fig. 4: schematische Detaildraufsicht auf eine Backfolie mit einem Nadelmuster.

### WEGE ZUM AUSFÜHREN DER ERFINDUNG

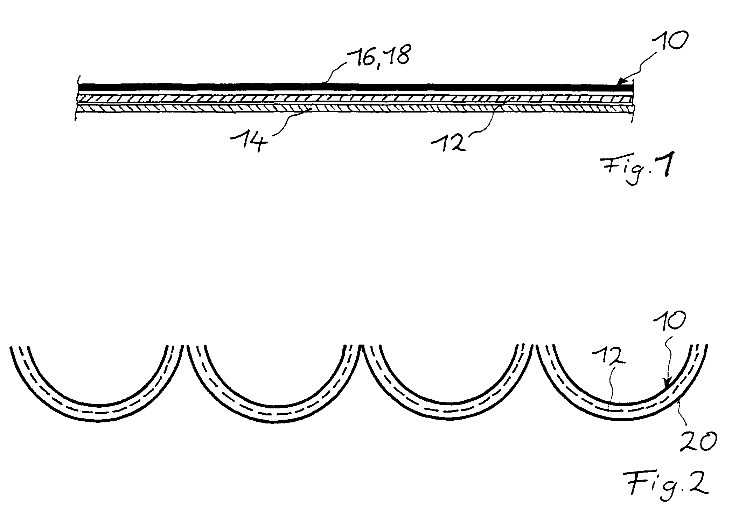

Fig. 1 zeigt schematisch den schichtweisen Aufbau einer Backfolie 10. Eine Trägerschicht, bestehend aus einer Rohglasgewebeschicht 16 und beidseitig angeordneten Polytetrafluorethylenbeschichtungen 18, auf die oberseitig die zu backenden Lebensmittel angeordnet werden, besitzt unterseitig eine Klebeschicht 12, die von einer Schutzschicht 14 abgedeckt ist. Die Schutzschicht 14 besteht aus gewellter PVC-Folie und kann von der Klebeschicht 12 abgezogen werden.

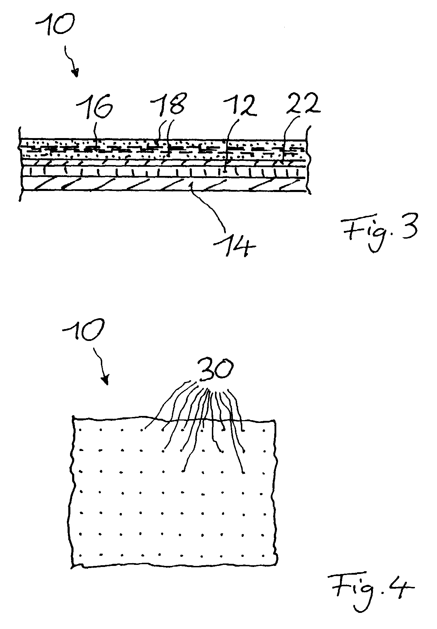

Eine detaillierte Schichtdarstellung ist in Fig. 3 dargestellt. Hier ist erkennbar, daß die PTFE-Dispersionsbeschichtungen 18 beidseitig einer Rohglasgewebeschicht 16 angeordnet sind und diese teilweise durchdringen. Unterseitig ist die PTFE-Beschichtung aufgerauht und mit einer Primer-Beschichtung 22 versehen. Auf die Primer-Beschichtung 22 ist die Klebeschicht 12 aufgebracht, die als Silikonkleber ausgebildet ist und eine Zusatzkomponente zwecks besserer Vernetzung enthält. Unterseitig ist die Klebeschicht 12 mit einer Schutzschicht 14 aus gewellter PVC-Folie abgedeckt.

Fig. 2 zeigt schematisch eine Backblechform 20 mit eingeklebter Backfolie 10.

Eine besonders bevorzugte Ausgestaltung der Backfolie ist in Fig. 4 schematisch dargestellt. Die Backfolie 10 ist oberseitig in dem dargestellten Muster 30 mittels Nadelung punktuell bearbeitet, wobei diese Nadelung eine Faltenbildung verhindert und die Gefahr von Anhaftungen vermindert.

Als "Backform" kommen auch folgende Transportgeräte für Teiglinge in Betracht: Baguettegehänge, Kipptrögel, Kippdielen oder dergleichen. Die Backfolie kann ebenfalls auf Brötchenanlagegehänge geklebt werden, die zum maschinellen Transportieren für Teiglinge in Maschinen dienen. Weiterhin sind die unterschiedlichsten Backformen denkbar, wie beispielsweise Windbeuteldosen, Brotbackformen, Tortenringe oder dergleichen.

Mit der dargestellten Backfolie werden unter anderem folgende Vorteile erreicht:
- die direkte Verklebung auf das Trägermaterial vermeidet Verbrennungsrückstände auf dem Trägermaterial,
- eine Abblätterung der Beschichtung wird vermieden,
- die aufgelegten Bäckereiwaren haben keinen Boden mit Verbrennungsrückständen,
- durch die direkte Aufklebung können Baguettebleche stabiler konstruiert werden,
- durch die Nadelung wird Faltenbildung und werden Anhaftungen vermieden,
- der gewählte PTFE-Gehalt vermeidet ebenfalls die Bildung von Anhaftungen und gleichzeitig wird ein zu leichtes Verrutschen des Backguts verhindert,
- die Austauschbarkeit der Backfolie gewährleistet einen wirtschaftlichen Einsatz.

## Patentansprüche

1. Backfolie (10) zur Verwendung als Unterlage von Backgut in/auf Backformen (20), Backplatten, Backblechen, Kippdielen oder sonstiger als Form geeigneter Mittel in Bäckereien, wobei die Unterlage eine einseitig mit einer Klebeschicht (12) versehene Antihaftfolie (16, 18) aufweist,
**gekennzeichnet durch**
folgende in Kombination zusammenwirkende Merkmale:
- Rohglasgewebeschicht (16)
- beidseitig der Rohglasgewebeschicht (16) aufgebrachte Polytetrafluorethylen (PTFE)-Dispersionsbeschichtung (18) mit einem Polytetrafluorethylengehalt von 55 bis 85 Gew.%, insbesondere 65 bis 75 Gew.%, bezogen auf das Gewicht der beschichteten Gewebeschicht,
- einseitig auf die Dispersionsbeschichtung (18) aufgebrachte lebensmittelechte Klebeschicht (12), wobei die Klebermenge der Klebeschicht (12) 50 g/m² bis 80 g/m², insbesondere um ca. 50 g/m² (Gramm pro Quadratmeter) Folie beträgt, und
- auf der Klebeschicht (12) einseitig lösbar angebrachte Schutzschicht (14).

2. Folie nach Anspruch 1,
**dadurch gekennzeichnet**, daß
- die der Klebeschicht (12) zugewandte Seite der Dispersionsbeschichtung (18) eine Aufrauhung besitzt.

3. Folie nach Anspruch 1 und/oder 2,
**dadurch gekennzeichnet**, daß
- die der Klebeschicht (12) zugewandte Dispersionsschicht (18) eine Primer-Beschichtung (22) besitzt.

4. Folie nach einem oder mehreren der vorstehenden Ansprüche,
**dadurch gekennzeichnet**, daß
- die Klebeschicht als Silikon-Klebeschicht ausgebildet ist.

5. Folie nach einem oder mehreren der vorstehenden Ansprüche,
**dadurch gekennzeichnet**, daß
- die Schutzschicht (14) als Polyvinylchlorid(PVC)-Folie, insbesondere in gewellter Form, ausgebildet ist.

6. Folie nach einem oder mehreren der vorstehenden Ansprüche,
**dadurch gekennzeichnet**, daß
- die Folie in einem vorgebbaren Raster mittels sogenannter Nadelung bearbeitete Punkte (30) aufweist, wobei insbesondere der Lochdurchmesser der bearbeiteten Punkte (30) der Nadelung kleiner als 1 mm (Millimeter) ist und/oder das Rastermaß der bearbeiteten Punkte (30) der Nadelung kleiner als 3 mm (Millimeter) ist.

7. Folie nach einem oder mehreren der vorstehenden Ansprüche,
**dadurch gekennzeichnet**, daß
- die Dicke der Folie ca. 0,7 mm bis 1,0 mm (Millimeter) beträgt.

8. Folie nach einem oder mehreren der vorstehenden Ansprüche,
**dadurch gekennzeichnet**, daß
- die Klebeschicht so ausgebildet ist, daß die Backfolie lösbar mit der Backform (20) oder dergleichen verbunden ist.

9. Backformeinrichtung wie Backform, Backplatte, Backblech, Kippdiele oder sonstiges als Form geeignetes Mittel zur Aufnahme von zu backenden Lebensmitteln,
**dadurch gekennzeichnet**, daß
- auf die Backformeinrichtung eine Backfolie nach einem oder mehreren der vorstehenden Ansprüche aufgeklebt ist.

10. Verfahren zum Aufbringen einer Backfolie nach einem oder mehreren der Ansprüche 1 bis 8 auf eine Backformeinrichtung, gekennzeichnet durch folgende Verfahrensschritte:
- Abziehen der Schutzschicht,
- Auflegen und Andrücken der Backfolie in/auf die Backformeinrichtung und
- erstmalige Erhitzung der Backformeinrichtung mit Backfolie maximal 15 Minuten, insbesondere 10 Minuten, auf eine Temperatur von maximal 250 ° C (Grad Celsius), insbesondere 200 ° C (Grad Celsius).
